(19) Europäisches Patentamt
European Patent Office
Office européen des brevets

(11) EP 0 773 224 B1

(12) EUROPÄISCHE PATENTSCHRIFT

(45) Veröffentlichungstag und Bekanntmachung des Hinweises auf die Patenterteilung:
**05.12.2001 Patentblatt 2001/49**

(51) Int Cl.[7]: **C07F 7/18**

(21) Anmeldenummer: **96115226.1**

(22) Anmeldetag: **23.09.1996**

(54) **Verfahren zur selektiven Synthese von Silylalkyldisulfiden**

Process for the selective synthesis of silylalkyl disulfides

Procédé de préparation sélective de bisulfures de silylalkyles

(84) Benannte Vertragsstaaten:
**BE CH DE ES FR GB IT LI LU NL PT**
Benannte Erstreckungsstaaten:
**SI**

(30) Priorität: **07.11.1995 DE 19541404**

(43) Veröffentlichungstag der Anmeldung:
**14.05.1997 Patentblatt 1997/20**

(73) Patentinhaber: **Degussa AG**
**40474 Düsseldorf (DE)**

(72) Erfinder:
- **Göbel, Thomas, Dr.**
  **63457 Hanau (DE)**
- **Münzenberg, Jörg, Dr.**
  **63457 Hanau (DE)**

(56) Entgegenhaltungen:
**EP-A- 0 217 178** **DE-B- 2 360 470**

- **WOJNOWSKI, W. ET AL: "Chemistry of silicon-sulfur compounds. 50. Bis(triorganoxysilyl)polysulfides and the structure of bis(tri-tert-butoxysilyl)disulfide" Z. ANORG. ALLG. CHEM. (1988), 561, 167-73 CODEN: ZAACAB;ISSN: 0044-2313, XP002052440**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 773 224 B1

Printed by Jouve, 75001 PARIS (FR)

## Beschreibung

Die vorliegende Erfindung bezieht sich auf ein Verfahren zur selektiven Synthese von Silylalkyldisulfiden durch Desulfurierung entsprechender Polysulfide mit nucleophilen Reagenzien.

Trialkoxypropylpolysulfide sind ausgezeichnete Phasenvermittler für den Einbau von oxidischen Materialien in Kautschukmatrices. Insbesondere in der Reifenindustrie findet das Triethoxysilylpropyltetrasulfan ([ $(CH_3CH_2O)_3SiCH_2CH_2CH_2]_2S_4$) breite Anwendung in kieselsäureverstärkten Reifen. Es kommt dabei zu einer Anbindung des Silans an freie Hydroxylgruppen der Kieselsäure auf der einen Seite und zu einer vulkanisationsartigen Vernetzung mit dem Kautschuk auf der anderen. Für spezielle Anwendungen ist es sinnvoll, das Silan nicht mit einer Tetrasulfan- sondern einer weniger reaktiven Disulfanfunktion auszustatten. Die Synthese von Silylalkyldisulfanen wird zusammen mit denen entsprechender Polysulfide in verschiedenen Patenten und Veröffentlichungen beschrieben.

Die DE-PS 2 405758 und die DE-PS 2 542534 betreffen die Herstellug ausgehend von Mercaptoalkylsilanen und Schwefel, bei der Schwefelwasserstoff freigesetzt wird.

Mehrere Herstellungsmethoden gehen von in situ erzeugten Disulfiden aus, mit denen dann nucleophile Substitutionen an Halogenalkylsilanen durchgeführt werden. Diese Verfahren unterscheiden sich nur in der Synthese des Nucleophils Disulfid. Gemäß DE-PS 3 311340 wird das Disulfid durch Reaktionen zwischen Hydrogen-sulfid, Natrium und Schwefel in Ethanol erzeugt.

Gemäß US-PS 5,405,985 wird eine wäßrige Natriumsulfidlösung zusammen mit Schwefel zur Darstellung benutzt. Fachleuten ist hinreichend bekannt, daß bei Reaktionen zwischen Sulfiden und Schwefel Gemische unterschiedlicher Polysulfide entstehen, so daß bei der nucleophilen Substitution wiederum nur ein Gemisch von Polysulfanen verschiedener Kettenlänge resultieren kann. Gleiches gilt für Reaktionen zwischen Mercaptanen bzw. Thiolaten und Schwefel. Es ist außerdem bekannt, daß aus diesen Produktgemischen die entsprechenden Disulfane nur unter großen Schwierigkeiten isoliert werden können.

In der DE-PS 2 360470 wird zwar ein Weg zur Herstellung von reinem Bis(silylalkyl)disulfan durch Oxidation des entsprechenden Mercaptans mit Sulfurylchlorid beschrieben, doch entstehen bei dieser Methode stark korrosive Nebenprodukte ($SO_2$, HCl). Nebenreaktionen am Silylrest führen außerdem zu einer Verminderung der Ausbeute am erwünschten Produkt (Beispiel: 63,3 %).Eine weitere oxidative Variante findet sich in der EP-A1 217178. Hier werden entsprechende Thiolate durch Jod zu den Disulfiden oxidiert. Der Prozeß erfordert nach der aufwendigen Herstellung des Silylalkyl-mercaptans zwei weitere Reaktionsschritte.

Aufgabe der Erfindung ist es, ein einfaches Verfahren bereitzustellen, das in hoher Ausbeute zu den gewünschten Silylalkyldisulfiden führt.

Gegenstand der Erfindung ist ein
Verfahren zur Herstellung von Bis(silylalkyl)disulfanen der allgemeinen Formel

$$(R^1R^2R^3SiR^4)_2\ S_2 \qquad (I),$$

in der bedeuten:

R¹, R², R³: gleich oder verschieden voneinander, verzweigte oder unverzweigt Alkyl- und/oder Alkoxygruppen mit einer Kettenlänge von 1 bis 8 C-Atomen,wobei bevorzugt mindestens eine Alkoxygruppe vorhanden ist. Wasserstoff oder einwertige Arylreste,insbesondere Phenyl, Toluyl, Benzyl

$R^4$: zweiwertiger Alkylidenrest mit einer Kettenlänge von 1 bis 8 C-Atomen, bevorzugt 2 bis 4 C-Atomen oder

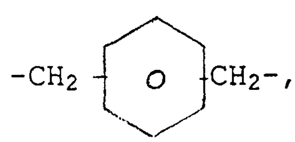

das dadurch gekennzeichnet ist, daß man Silylalkylpolysulfide (-sulfane) oder Silylalkylpolysulfangemische der allgemeinen Formel

$$(R^1\ R^2R^3SiR^4)_2S_n \qquad (II),$$

in der $R^1$, $R^2$, $R^3$ und $R^4$ die Bedeutung aus Formel (I) besitzen, und n einer ganzzahligen Zahl zwischen 3 und 20, insbesondere zwischen 3 und 10, entspricht, mit einer nucleophilen Verbindung der allgemeinen Formeln

$$M^+ CN^- \qquad (III)$$

oder

$$M^+_2 SO_3^{2-} \qquad (IV),$$

in denen bedeuten:
$M^+$ ein Alkalikation, ein substituiertes oder unsubstituiertes Ammoniumion oder ein halbes Erdalkali- oder Zinkion, oder der allgemeinen Formel

$$R^5R^6R^7P \qquad (V),$$

in der $R^5$, $R^6$, $R^7$, dieselbe Bedeutung haben können wie $R^1$, $R^2$, $R^3$ in Formel (I), umsetzt wobei man die Verbindungen, gemäß den allgemeinen Formeln (III) bis (V) äquimolar zur Zahl der aus der Verbindung gemäß der allgemeinen Formel (II) zu entfernenden Schwefelatome bevorzugt einzeln, aber auch im Gemisch einsetzt, den entstehenden Feststoff abfiltriert und das erhaltene Disulfan aufreinigt.

Das Verfahren kann sowohl in einem lösungsmittelfreien System als auch unter Zusatz von Lösungsmitteln durchgeführt werden. Bevorzugt werden solche, in denen die eingesetzte nucleophile Verbindung wenigstens teilweise löslich ist.

Aliphatische Lösungsmittel, wie z. B. Pentan, Hexan oder Gemische verschiedener verzweigter und unverzweigter Alkane oder aromatische Lösungsmittel, wie z. B. Benzol, Toluol oder Xylol oder Ether, wie z. B. Diethylether, Dibenzylether, Methyl-tert.-butylether sind verwendbar.

Vorzugsweise kommt als organisches Lösungsmittel ein linearer oder verzweigter Alkohol mit 1-8 C-Atomen, wie z. B. Methyl-, Ethyl-, Propyl-, Butyl- oder Pentylalkohol zum Einsatz. Geeignet sind auch Cycloalkylalkohole mit 5-8 C-Atomen, Phenol oder Benzylalkohol.

Sinnvollerweise wird, um z. B. eine Umesterung zu vermeiden, der jeweils zur Gruppe $R^{1,}$ $R^2$, $R^3$ (Alkoxy) korrespondierende Alkohol verwendet. Gegebenenfalls kann auch die Verwendung eines Gemischs dieser Alkohole von Vorteil sein, z. B. wenn $R^1$, $R^2$, $R^3$ in einer Verbindung unterschiedliche Bedeutungen besitzen.

In einer besonderen Ausführungsform der Erfindung wird die Reaktion in einem 2-Phasensystem durchgeführt, wenn das Lösungsmittel, wie z. B. Wasser mit dem eingesetzten Sulfan nicht mischbar ist.

Das substituierte Ammoniumion kann mit $C_1$-$C_4$ Alkyl teilweise oder ganz substituiert sein.

In diesem Fall setzt man einen der bekannten Phasentransferkatalysatoren,z. B. Aliquat 336 $(C_8H_{17})_3N^+CH_3Cl^-$ in den üblichen Mengen ein.

(siehe E.V. Dehmlow, S.S. Dehmlow, "*Phase Transfer Catalysis"* 2. Auflage, Weinheim 1983)

Die Reaktion kann sowohl bei Raumtemperatur als auch bei höheren Temperaturen durchgeführt werden. Um Reaktionszeiten möglichst kurz zu halten, ist es sinnvoll, die Reaktion bei erhöhten Temperaturen, bevorzugt bei der Siedetemperatur des eingesetzten Lösungsmittels durchzuführen.
Für den Erfolg des Verfahrens ist es unwichtig, ob es drucklos oder unter Druck ausgeführt wird. Die Durchführung der Erfindung wird durch die folgenden Beispiele illustriert.

In einer vorteilhaften Ausführungsform der Erfindung gelingt die Herstellung der Disulfide in einem vereinfachten Verfahren.

Es erweist sich als nicht notwendig, die zu desulfurierenden Polysulfane separat herzustellen. Erfindungsgemäß gelingt es, diese in situ zu synthetisieren und in einem *"Eintopf"*-Verfahren gleich in die gewünschten Disulfide umzuwandeln.

Zu diesem Zweck stellt man eine Lösung her, gegebenenfalls eine Suspension, die

a) ein Polysulfid oder Polysulfidgemisch der allgemeinen Formel $M^+_2 S_n$, wobei $M^+$ und n die vorgenannten Bedeutungen haben,
b) ein nucleophiles Reagenz oder ein Gemisch unterschiedlicher nucleophiler Reagenzien der allgemeinen For-

meln $M^+CN^-$,$M^+{}_2SO_3{}^{2-}$, $R^5$ $R^6$ $R^7$ P, in denen $M^+$, $R^5$,$R^6$ und $R^7$ die bereits erwähnten Bedeutungen haben
c) eine Organosiliciumverbindung der allgemeinen Formel

$$Cl\text{-}R^4\text{-}Si(R^1R^2R^3)_3 \qquad (VI),$$

in der $R^1$, $R^2$, $R^3$, $R^4$ die obengenannte Bedeutung besitzen,

in einem molaren Verhältnis von insbesondere 0,4 bis 0,7 (a) : 1 bis 1,1 (b) : 1 (c) enthält.

Dabei ergibt sich das Verhältnis von (a) : (b) aus der Zahl der aus (II) zu entfernenden Schwefelatome.

Als Lösungsmittel, insbesondere im Hinblick auf (VI) verwendet man bevorzugt den Alkohol, der mit $R^1$, $R^2$, $R^3$ aus (I) in ihrer Bedeutung als Alkoxygruppe korrespondiert.

Ohne besonderen Einfluß bleibt die Reihenfolge, in der man die Bestandteile in das Lösungsmittel, bevorzugt bei einer Temperatur von 20 °C bis 35 °C einrührt.

Die Umsetzung findet bei einer demgegenüber erhöhten Temperatur statt, insbesondere im Bereich von 40 °C bis zur Rückflußtemperatur des in der Mischung verwendeten Lösungsmittels.

Im allgemeinen setzt man eine 10 bis 90 Gew.%ige Lösung der Organosiliciumverbindung ein, bezogen auf das Gesamtgewicht der Reaktionsmischung.

Nach der Umsetzung kühlt man die Mischung ab, entfernt das Lösungsmittel unter Vakuum und reinigt den verbleibenden Feststoff mit geeigneten organischen Lösungsmitteln, insbesondere Petrolether, in denen sich das gewünschte Disulfid löst, auf.

Nach dem Abtrennen des Lösungsmittels findet man das reine Disulfan.

Die Beispiele erläutern das genaue Vorgehen.

Beispiel 1

*Desulfurierung vom Bis (triethoxysilylpropyl) tetrasulfan mit NaCN in Ethanol*

In einem 250 ml Dreihalskolben mit Magnetrührung und Rückflußkühler werden 67,37 g (0,125 mol) Bis (triethoxysilylpropyl)tetrasulfan in 60 ml Ethanol vorgelegt. Zu dieser Mischung gibt man 12,25 g (0,250 mol) pulverförmiges Natriumcyanid. Die Mischung wird 4 h unter Rückfluß erhitzt. Nach Abkühlen auf Raumtemperatur wird das Lösungsmittel am Rotationsverdampfer abdestilliert. Man läßt die Fest-Flüssig-Mischung zur vollständigen Kristallisation des Feststoffs 2 h bei Raumtemperatur stehen und filtriert. Der Filterkuchen wird dreimal mit 50 ml Petrolether ausgewaschen. Nach Abziehen des Petrolethers aus dem Filtrat wird reines Bis(triethoxysilylpropyl)tetrasulfan erhalten. (Kontrolle durch $^1$H-NMR-Spektroskopie).
Ausbeute: 97 %.

Beispiel 2

*Desulfurierung von Bis(triethoxysilylpropyl)tetrasulfan mit KCN in Ethanol*

In einer 200 l Glasblase mit Schnell-laufrührer legt man 67,34 kg (125 mol) Bis(triethoxysilylpropyl)tetrasulfan in 60 l Ethanol vor. Unter Rühren wird 16,28 kg (250 mol) festes Kaliumcyanid dazugegeben. Unter Stickstoff wird 4 h unter Rückfluß erhitzt. Nach Abziehen des Lösungsmittels bei 80 °C unter Vakuum läßt man abkühlen und filtriert den ausgefallenen Feststoff ab. Der Filtrierrückstand wird dreimal mit je 10 l Petrolether nachgewaschen. Vom Filtrat wird das Lösungsmittel bei 70 °C im Vakuum entfernt.

Es werden 58,8 kg (124 mol) reines Bis(triethoxysilylpropyl)disulfan erhalten (Kontrolle durch $^1$H-NMR-Spektroskopie).
Ausbeute: 99 %

Beispiel 3

*Desulfurierung von Bis(triethoxysilylpropyl)tetrasulfan mit NaCN im 2-Phasensystem*

In einem 500 ml Dreihalskolben mit Magnetrührung, Rückflußkühlung und Tropftrichter werden 19,6 g (0,4 mol) NaCN in 160 ml Wasser vorgelegt und auf 90 °C erwärmt. Bei Erreichen dieser Temperatur wird innerhalb von 45 min eine Mischung aus 107,8 g (0,2 mol) Bis(triethoxysilylpropyl)tetrasulfan, 120 ml Toluol und 5 g Phasentransferkatalysator Aliquat 336 zugetropft. Nach Beendigung der Zugabe wurde noch 2 h bei dieser Temperatur gerührt, abgekühlt und schließlich von 12,4 g unlöslichen Materials abfiltriert. Die organische und wäßrige Phase des Filtrats wurden getrennt und die organische Phase im Vakukum eingedampft. Man erhält 90,4 g (0,19 mol) reines Bis(triethoxysilylpropyl)disulfan (Kontrolle durch $^1$H-NMR-Spektroskopie).
Ausbeute: 95 %.

Beispiel 4

*Desulfurierung von Bis(triethoxysilylpropyl)tetrasulfan mit Triphenylphosphan in Ethanol*

In einem 250 ml Dreihalskolben mit Magnetrührung und Rückflußkühler werden 67,37 g (0,125 mol) Bis (triethoxysilylpropyl)tetrasulfan in 60 ml Ethanol vorgelegt. Zu dieser Mischung gibt man 65,57 g (0,250 mol) festes Triphenylphosphan. Die Mischung wird 4 h unter Rückfluß erhitzt. Nach Abkühlen auf Raumtemperatur wird das Lösungsmittel am Rotationsverdampfer abdestilliert. Man läßt die Fest-Flüssig-Mischung zur vollständigen Kristallisation des Feststoffs 2 h bei Raumtemperatur stehen und filtriert. Der Filterkuchen wird dreimal mit 50 ml Petrolether ausgewaschen. Nach Abziehen des Petrolethers aus dem Filtrat wird reines Bis(triethoxysilylpropyl)disulfan erhalten (Kontrolle durch $^1$H-NMR-Spektroskopie).
Ausbeute: 98 %.

Beispiel 5

*Desulfurierung von Bis (triethoxy-silylpropyl) tetrasulfan mit Natriumsulfit-Hydrat*

In einem 1000 ml Dreihalskolben mit KPG-Rührer, Rückflußkühler und Tropftrichter wird eine Mischung aus 160 ml Wasser und 105,9 g(0,85 mol) Natriumsulfit-Hydrat auf 90 °C erwärmt. Bei dieser Temperatur wird ein Gemisch aus 226,4 g (0,42 mol) Bis(triethoxysilylpropyl)tetrasulfan, 20 ml Ethanol und 5,0 g Aliquat 336 innerhalb von 30 Minuten zugetropft. Nach Beendigung des Zutropfens werden weitere 100 ml Ethanol zugegeben und 3,5 h bei 80 °C gerührt. Nach Abkühlen des Reaktionsgemischs auf Raumteperatur wird die wässrige Phase abgetrennt. Am Rotationsverdampfer wird von der organischen Phase das Lösungsmittel im Vakuum abdestilliert. Man erhält 198,9 g (0,41 mol) Bis(triethoxysilylpropyl)disulfan (Kontrolle durch $^1$H-NMR-Spektroskopie).
Ausbeute: 99 %

Beispiel 6

*Desulfurierung von in situ hergestelltem Bis(triethoxysilylpropyl)tetrasulfan mit NaCN*

In einem 500 ml Dreihalskolben mit Magnetrührung und Rückflußkühler wird eine Mischung aus 43,5 g (0,25 mol) eines Polysulfids der mittleren Zusammensetzung $Na_2S_4$, 24,5 g (0,5 mol) NaCN und 120,4 g (0,5 mol) Chlorpropyltriethoxysilan in 120 ml Ethanol vorgelegt und 2 h unter Rückfluß erhitzt. Nach Abkühlen des Produktgemischs auf Raumtemperatur wurde das Lösungsmittel im Vakuum entfernt, der verbleibende Rückstand mit 150 ml Petrolether aufgenommen und filtriert. Der Filtrierrückstand wird dreimal mit je 50 ml Petrolether gewaschen. Von den gesammelten Filtraten wurde das Lösungsmittel im Vakuum entfernt. Man erhält 108,7 g (0,21 mol) des reinen Disulfans (Kontrolle durch $^1$H-NMR-Spektroskopie).
Ausbeute: 94 %

## Patentansprüche

1. Verfahren zur Herstellung von Bis(silylalkyl)disulfanen der allgemeinen Formel

$$(R^1R^2R^3SiR^4)_2\ S_2 \qquad (I),$$

in der bedeuten:

$R^1$, $R^2$, $R^3$: gleich oder verschieden voneinander, verzweigte oder unverzweigte Alkyl- und/oder Alkoxygruppen mit einer Kettenlänge von 1 bis 8 C-Atomen, Wasserstoff oder einwertige Arylrest, insbe-

sondere Phenyl, Toluyl, Benzyl

$R^4$: zweiwertiger Alkylidenrest mit einer Kettenlänge von 1 bis 8 C-Atomen, bevorzugt 2 bis 4 C-Atomen oder

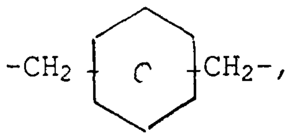

**dadurch gekennzeichnet, daß** man Silylalkylpolysulfide oder Gemische von Silylalkylpolysulfiden der allgemeinen Formel

$$(R^1 R^2 R^3 SiR^4)_2 S_n \qquad (II),$$

in der $R^1$, $R^2$, $R^3$ und $R^4$ die Bedeutung aus Formel (I) besitzen, und n einer ganzzahligen Zahl zwischen 3 und 20, insbesondere zwischen 3 und 10, entspricht mit einer nucleophilen Verbindung der allgemeinen Formeln

$$M^+ CN^- \qquad (III)$$

oder

$$M^+_2 SO_3^{2-} \qquad (IV),$$

in denen bedeuten:
$M^+$ ein Alkalikation, ein substituiertes oder unsubstituiertes Ammoniumion oder ein halbes Erdalkali- oder Zinkion, oder der allgemeinen Formel

$$R^5 R^6 R^7 P \qquad (V),$$

in der $R^5$, $R^6$, $R^7$, dieselbe Bedeutung haben können wie $R^1$, $R^2$, $R^3$ in Formel (I), umsetzt wobei man die Verbindungen, gemäß den allgemeinen Formeln (III) bis (V) äquimolar zur Zahl der aus der Verbindung gemäß der allgemeinen Formel (II) zu entfernenden Schwefelatome einsetzt, den entstehenden Feststoff abfiltriert und das erhaltene Disulfan aufreinigt.

**2.** Verfahren gemäß Anspruch 1,
**dadurch gekennzeichnet, daß** man die Verbindungen gemäß den Formeln (III) bis (V) im Gemisch einsetzt.

**3.** Verfahren gemäß den Ansprüchen 1 und 2,
**dadurch gekennzeichnet, daß** man die Umsetzung in Gegenwart eines die nucleophilen Verbindungen lösenden Lösungsmittels durchführt.

**4.** Verfahren gemäß den Ansprüchen 1 und 3,
**dadurch gekennzeichnet, daß** man die Umsetzung bei einer Temperatur zwischen 20 °C und der Siedetemperatur des eingesetzten Lösungsmittels durchführt.

**5.** Verfahren gemäß den Ansprüchen 1 bis 4,
**dadurch gekennzeichnet, daß** man die Umsetzung in einem Zweiphasensystem in Gegenwart eines Phasentransferkatalysators durchführt.

**6.** Verfahren gemäß Anspruch 1,
**dadurch gekennzeichnet, daß** man die umzusetzenden Silylalkylpolysulfane der allgemeinen Formel (II) in situ synthetisiert, indem man eine Lösung herstellt, die

a) ein Polysulfid oder ein Polysulfidgemisch der allmeinen Formel $M^{+}_{2}\ S_n$, wobei $M^+$ und n die gleiche Bedeutung haben wie zuvor;
b) ein nucleophiles Reagenz aus der Gruppe $M^+CN^-$, $M^{+}_{2}\ SO_3^{2-}$,
$R^5\ R^6\ R^7\ P$, einzeln oder gemeinsam, wobei:
$M^+$, $R^5$, $R^6\ R^7$ die bereits erwähnten Bedeutungen haben
c) eine Organosiliciumverbindung der allgemeinen Formel

$$Cl\text{-}R^4 - Si(R^1R^2R^3)_3 \qquad (IV),$$

in der $R^1$, $R^2$, $R^3$ und $R^4$ die obengenannte Bedeutung besitzen

in einem molaren Verhältnis von 0,4 bis 0,7 (a): 1 bis 1,1 (b) : 1 (c) enthält, dieses Gemisch miteinander umsetzt und das gewünschte Disulfid durch übliche Aufreinigung abtrennt.

## Claims

**1.** Process for the production of bis(silylalkyl)disulfanes of the general formula

$$(R^1R^2R^3SiR^4)_2\ S_2 \qquad (I),$$

where

$R^1$, $R^2$, $R^3$ means: branched or unbranched alkyl and/or alkoxy groups which are identical to or different from each other, with a chain length of 1 to 8 C atoms, hydrogen or monovalent aryl group [sic], in particular phenyl, toluyl, benzyl
$R^4$ means: divalent alkylide group with a chain length of 1 to 8 C atoms, preferably 2 to 4 C atoms or

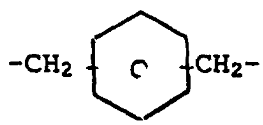

**characterised in that** silylalkyl polysulfides or mixtures of silylalkyl polysulfides of the general formula

$$(R^1\ R^2R^3SiR^4)_2S_n \qquad (II),$$

where $R^1$, $R^2$, $R^3$ and $R^4$ have the meaning from Formula (I) and n corresponds to a whole number between 3 and 20, in particular between 3 and 10, are reacted with a nucleophilic compound of the general formulae

$$M^+\ CN^- \qquad (III)$$

or

$$M^{+}_{2}\ SO_3^{2-} \qquad (IV),$$

where
$M^+$ means an alkalication, a substituted or unsubstituted ammonium ion or half of an earth alkali or zinc ion, or of the general formula

$$R^5R^6R^7P \quad (V),$$

where $R^5$, $R^6$, $R^7$, can have the same meaning as $R^1$, $R^2$, $R^3$ in formula (I), the compounds of the general formulae (III) to (V) being used in equimolar proportions to the number of sulfur atoms to be removed from the compound of the general formula (II), the resulting solid being filtered off and the disulfane obtained purified.

**2.** Process according to claim 1,
**characterised in that** the compounds of the formulae (III) to (V) are used in mixture.

**3.** Process according to claims 1 and 2,
**characterised in that** the reaction is carried out in the presence of a solvent which dissolves the nucleophilic compounds.

**4.** Process according to claims 1 and 3
**characterised in that** the reaction is carried out at a temperature between 20°C and the boiling point of the solvent used.

**5.** Process according to claims 1 to 4,
**characterised in that** the reaction is carried out in a two-phase system in the presence of a phase transfer catalyst.

**6.** Process according to claim 1,
**characterised in that** the silylalkyl polysufanes of the general formula (II) to be reacted are synthesised in situ, by producing a solution which contains

a) a polysulfide or a polysulfide mixture of the general formula $M^+_2\ S_n$, $M^+$ and n having the same meaning as before;
b) a nucleophilic reagent of the group $M^+CN^-$, $M^+_2\ SO_3^{2-}$,
$R^5\ R^6\ R^7\ P$, individually or together:
$M^+$, $R^5$, $R^6\ R^7$ having the meaning already mentioned
C) an organosilicon compound of the general formula

$$Cl\text{-}R^4 - Si(R^1R^2R^3)_3 \quad (IV),$$

where $R^1$, $R^2$, $R^3$ and $R^4$ have the meaning given above

in a molar ratio of 0.4 to 0.7 (a): 1 to 1.1 (b) : 1 (c), reacting this mixture with each other [sic] and separating off the desired disulfides by conventional cleaning.

## Revendications

**1.** Procédé pour la préparation de bis(silylalkyl)disulfanes de formule générale

$$(R^1R^2R^3SiR^4)_2S_2 \quad (I),$$

dans laquelle :

$R^1$, $R^2$, $R^3$, identiques ou différents les uns des autres, représentent des groupes alkyle et/ou alcoxy ramifiés ou non ramifiés, ayant une longueur de chaîne de 1 à 8 atomes de carbone, un atome d'hydrogène ou un radical aryle monovalent, en particulier phényle, toluyle, benzyle,

$R^4$ représente un radical alkylidène divalent ayant une longueur de chaîne de 1 à 8 atomes de carbone, de préférence de 2 à 4 atomes de carbone, ou

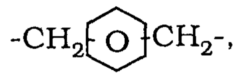

**caractérisé en ce qu'**
on fait réagir des polysulfures de silylalkyle ou des mélanges de polysulfures de silylalkyle de formule générale

$$(R^1R^2R^3SiR^4)_2S_n \qquad \text{(II),}$$

dans laquelle $R^1$, $R^2$, $R^3$ et $R^4$ ont les significations données à propos de la formule (I), et n correspond à un nombre entier compris entre 3 et 20, en particulier entre 3 et 10,
avec un composé nucléophile de formules générales

$$M^+CN^- \qquad \text{(III)}$$

ou

$$M^+{}_2SO_3{}^{2-} \qquad \text{(IV).}$$

dans lesquelles :
$M^+$ représente un cation alcalin, un ion ammonium substitué ou non substitué ou un demi-ion alcalino-terreux ou zinc,
ou de formule générale

$$R^5R^6R^7P \qquad \text{(V),}$$

dans laquelle $R^5$, $R^6$, $R^7$ ont les mêmes significations que $R^1$, $R^2$, $R^3$ dans la formule (I),
on utilise les composés selon les formules générales (III) à (V) en une quantité équimolaire par rapport au nombre des atomes de soufre à éliminer du composé selon la formule générale (II), on sépare par filtration le solide formé et on purifie le disulfane obtenu.

**2.** Procédé selon la revendication 1,
**caractérisé en ce qu'**
on utilise en mélange les composés selon les formules (III) à (V).

**3.** Procédé selon les revendications 1 et 2,
**caractérisé en ce qu'**
on effectue la réaction en présence d'un solvant qui dissout les composés nucléophiles.

**4.** Procédé selon les revendications 1 et 3,
**caractérisé en ce qu'**
on effectue la réaction à une température comprise entre 20°C et la température d'ébullition du solvant utilisé.

**5.** Procédé selon les revendications 1 à 4,
**caractérisé en ce qu'**
on effectue la réaction dans un système en deux phases, en présence d'un catalyseur de transfert de phase.

**6.** Procédé selon la revendication 1,
**caractérisé en ce qu'**
on synthétise in situ les silylalkylpolysulfanes de formule générale (II), à utiliser, en préparant une solution qui contient

a) un polysulfure ou un mélange de polysulfures de formule générale $M^+{}_2S_n$, $M^+$ et n ayant les mêmes significations que précédemment,

b) un réactif nucléophile choisi dans l'ensemble constitué par $M^+CN^-$, $M^+_2SO_3^{2-}$, $R^5R^6R^7P$, individuellement ou ensemble,

$M^+$, $R^5$, $R^6$ et $R^7$ ayant les significations déjà mentionnées,

c) un composé organosilicié de formule générale

$$Cl\text{-}R^4\text{-}Si(R^1R^2R^3)_3 \quad (VI),$$

$R^1$, $R^2$, $R^3$ et $R^4$ ayant les significations déjà mentionnées,
en un rapport molaire en particulier de 0,4 à 0,7 (a) : 1 à 1,1 (b) : 1 (c), on fait réagir les uns avec les autres les composants de ce mélange et on sépare par purification usuelle le disulfure recherché.